Europäisches Patentamt

European Patent Office

Office européen des brevets

(11) Publication number: **0 442 551 A1**

# EUROPEAN PATENT APPLICATION

(21) Application number: **91200124.5**

(22) Date of filing: **22.01.91**

(51) Int. Cl.5: **C09K 3/10, F16J 15/14**

(30) Priority: **15.02.90 GB 9003417**

(43) Date of publication of application:
**21.08.91 Bulletin 91/34**

(84) Designated Contracting States:
**AT BE CH DE DK ES FR GR IT LI LU NL SE**

(71) Applicant: **TBA Industrial Products Limited**
**20, St. Mary's Parsonage**
**Manchester M3 2NL(GB)**

(72) Inventor: **Hoyes, John Robert**
**2 The Brook, Calderbrook Road**
**Littleborough, Lancashire 0L15 9NW(GB)**
Inventor: **Woolfenden, Stephen**
**10 Southview**
**Bamford, Rochdale 0L11 5HU(GB)**

(74) Representative: **Hadfield, Robert Franklin et al**
**Bowdon House PO Box 20 Ashburton Road**
**West Trafford Park**
**Manchester M17 1RA(GB)**

(54) **Sheet sealing material.**

(57) Known sheet sealing material from which gaskets can be cut for sealing against an agressive chemical such as sulphuric acid comprises a sintered PTFE resin in which is dispersed an inert inorganic filler (eg ground quartz, against sulphuric acid) substantially all of which is of particle size less than 106 $\mu$m, and in particular less than 75 $\mu$m, most of it passing 53 $\mu$m.

According to the invention, the size distribution of filler is such that while substantially all of it remains of particle size less than 106 $\mu$m, 17.5 to 35% by weight is of particle size greater than 53 $\mu$m. Preferably at least 5% by weight is of particle size greater than 75 $\mu$m.

EP 0 442 551 A1

This invention relates to sheet sealing material, and more particularly to sheet sealing material from which gaskets can be cut for use in sealing against so-called "aggressive chemicals".

Such gaskets are for example used in the pulp and paper, petrochemical, plating and food processing industries, and it is well known to make them of a sintered polytetrafluoroethylene (PTFE) resin, that is to say of a resin whose predominant repeating unit is $-CF_2.CF_2-$. To reduce to acceptable limits the creep relaxation or cold flow which such resins suffer under flange pressure, it has long been the practice to load the PTFE with an inorganic filler (other than the asbestos previously employed in gasketing) which is capable not only of reinforcing the material to provide a good seal but also of withstanding attack from whatever liquid is to be confined. Thus, barium sulphate may be used as inert filler if strongly alkaline liquids are involved and quartz (crystalline silica) as inert filler against strong acids. With hydrofluoric acid, graphite is employed.

Gaskets of the kind just described, recommended for use up to 260° C, have been available for at least the past 10 years (see for example brochure GDAL-11/78-30M published 1978 by Garlock of Canada Ltd) and are still available (see for example GYLON: Non-asbestos gasketing, TP-Rev 6/86-20M, Garlock 1986). A typical product contains about 45% by weight of quartz, of particle size below 75 µm, with most of it (95% by weight) passing a 53 µm aperture sieve.

A suitable method of making sheet from which the gaskets can be cut, the so-called HS-10 process of du Pont, is described in an article published by the Valve Manufacturers Assocation of America and entitled "PTFE-based gasketing materials", presented by David G Lingard of Garlock Inc at the Asbestos Substitute Gasket and Packing Materials Seminar held in Houston, Texas in August 1986. In order to ensure that the materials have good sealing properties, the inert filler employed is very fine - below 75 µm as already indicated. There is no substantial content of particles sized greater than 106 µm (= BS sieve no. 150) so that the surfaces of the gasket are closely conformable to the surfaces to be sealed. However, it is very difficult to incorporate such fine filler in a PTFE resin so that it is uniformly dispersed therein, and the resulting lack of homogeneity is often reflected in a sealing capability which varies considerably over the area of the sintered sheet product.

We have now found that the filler employed need not consist of such very fine material as indicated above, and can be more readily incorporated if its size distribution is as follows.

According to the invention, there is provided sheet sealing material from which gaskets can be cut for sealing against an aggressive chemical, the material comprising a sintered PTFE resin in which is dispersed an inert inorganic filler substantially all of which is of particle size less than 106 µm, characterised in that from 17.5 to 35% by weight of the filler is of particle size greater than 53 µm. Preferably, at least 5% by weight is of particle size greater than 75 µm; and it is particularly preferred that from 7.5 to 20% by weight of the filler is of particle size greater than 75 µm.

The invention is further illustrated by the following Example.

Example
- - - - -

Paraffin was blended with a tape-making grade of PTFE powder, the quantity of paraffin used being such that it was absorbed completely by the polymer. Fine-ground quartz (about 97.5% by weight passing a sieve of aperture 106 µm, about 68% passing 45 µm, about 25% being retained on a sieve of 53 µm aperture and about 12% retained on 75 µm) was then blended with the paraffin-polymer mix.

The mix was fibrillated by passing it between calender bowls, and the resulting sheet was cross-fibrillated by passing multiple thicknesses at right-angles to the previous passage, again between the calender bowls. This cross-fibrillation was repeated several times to build up the green strength and uniformity of the sheet. At the conclusion of this stage the final sheet thickness was about 1.6 mm with biaxial orientation of the PTFE.

The paraffin was then removed completely by heating the sheet, and the material was then sintered at 350-400° C.

The properties of the product were as follows:

| | |
|---|---|
| Thickness (mm) | 1.63 |
| Specific gravity | 2.12 |
| Compressibility (%) | 7.4 |
| (ASTM F36) | |
| Recovery (%) | 46 |
| (ASTM F36) | |
| Tensile strength | 12.7 (direction A) |
| (ASTM F152) | 12.2 (at 90° to A) |
| Stress relaxation (MPa_) | 15.8 |
| (BS Condition/40 MPa/250°C) | |
| Gas leakage (ml/min) | 0.46 |
| (DIN) | |
| Liquid leakage (ml/hr) | 0.61 |
| (ASTM F37) | |

Following generally the procedure of the above Example, sintered sheet sealing material from which alkali-resistant gaskets can be cut is made by using, instead of quartz, barium sulphate of the particle size characteristics set out above for quartz.

**Claims**

1. Sheet sealing material from which gaskets can be cut for sealing against an agressive chemical, the material comprising a sintered PTFE resin in which is dispersed an inert inorganic filler substantially all of which is of particle size less than 106 $\mu$m, characterised in that from 17.5 to 35% by weight of said filler is of particle size greater than 53 $\mu$m.

2. Sheet sealing material according to claim 1, in which at least 5% by weight of the filler is of particle size greater than 75 $\mu$m.

3. Sheet sealing material according to claim 2, in which from 7.5 to 20% by weight of the filler is of particle size greater than 75 $\mu$m.

4. Sheet sealing material according to claim 1, 2 or 3, in which the filler is quartz.

5. A gasket cut from the sheet sealing material of any preceding claim.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| P,X | WORLD PATENT INDEX, LATEST, accession no. 90-128541 [17], Derwent Publications Ltd, London, GB; & JP-A-2 077 484 (NICHIAS CORP.) * Whole abstract * | 1-5 | C 09 K 3/10 F 16 J 15/14 |
| | − − − | | |
| Y | FILE SUPPLIER JAPS, Patent Office of Japan, Tokyo, JP; & JP-A-1 198 674 (NICHIAS CORP.) * Whole abstract * | 1-5 | |
| | − − − | | |
| Y | FILE SUPPLIER JAPS, Patent Office of Japan, Tokyo, JP; & JP-A-2 022 376 (NICHIAS CORP.) * Whole abstract * | 1-5 | |
| | − − − | | |
| A | DE-A-3 142 535   (PFAUDLER WERKE AG) * Page 4, lines 1-14 from the bottom; page 5, lines 1-31 from the top; page 6, lines 1-11 from the top; claims 1-7 * | 1-5 | |
| | − − − − − | | **TECHNICAL FIELDS SEARCHED (Int. Cl.5)** |
| | | | C 09 K F 16 K |

The present search report has been drawn up for all claims

| Place of search | Date of completion of search | Examiner |
|---|---|---|
| The Hague | 04 April 91 | LEDER M. |

CATEGORY OF CITED DOCUMENTS

X : particularly relevant if taken alone
Y : particularly relevant if combined with another
document of the same catagory
A : technological background
O : non-written disclosure
P : intermediate document
T : theory or principle underlying the invention

E : earlier patent document, but published on, or after
the filing date
D : document cited in the application
L : document cited for other reasons

& : member of the same patent family, corresponding
document